# EUROPEAN PATENT APPLICATION

(11) **EP 4 746 057 A1**
(43) Date of publication of application: **20.05.2026**
(21) Application number: 25790685.9
(22) Date of filing: 17.04.2025
(51) Int. Cl.: H01M 4/04, H01M 10/04, B05C 5/02, B05C 11/10

(54) **SECONDARY BATTERY MANUFACTURING EQUIPMENT**

(30) Priority: 18.04.2024 KR 20240051960
(71) Applicant: LG Energy Solution, Ltd., Seoul 07335 (KR)
(72) Inventor: PARK, Min Gu, Daejeon 34122 (KR); CHOI, Min Hyuck, Daejeon 34122 (KR); MOON, Young Gyu, Daejeon 34122 (KR)
(74) Representative: Plasseraud IP
(86) International application number: PCT/KR2025/005238
(87) International publication number: WO 2025/221060

(57) **Abstract**

According to exemplary embodiments, a secondary battery manufacturing facility is provided. The secondary battery manufacturing facility includes an electrode slurry supply tank configured to accommodate electrode slurry; a pump configured to move the electrode slurry in the electrode slurry supply tank; a die coater configured to apply the electrode slurry to an electrode current collector; a first supply pipe connecting the electrode slurry supply tank and the pump; a second supply pipe connecting the pump and a branch pipe; a third supply pipe connecting the branch pipe and the die coater; a return pipe connecting the branch pipe and the electrode slurry supply tank; a supply valve installed in the third supply pipe; and a return valve installed in the return pipe, wherein a sum of a length of the first supply pipe and a length of the second supply pipe is different from a length of the third supply pipe.

## Description

### [Technical Field]

The present disclosure relates to a secondary battery manufacturing facility. This application claims the benefit of priority from Korean Patent Application No. 10-2024-0051960, filed on April 18, 2024, the entire contents disclosed therein are incorporated by reference into this disclosure.

### [Background]

Unlike primary batteries, secondary batteries can be charged and discharged multiple times. Secondary batteries are widely used as energy sources for various wireless devices such as handsets, laptops, wireless vacuum cleaners, etc. Recently, due to energy density improvements and economies of scale, the manufacturing cost per unit capacity of secondary batteries has dramatically decreased, and as the cruising distance of BEVs (battery electric vehicles) has increased to a level equivalent to fuel vehicles, the primary applications of secondary batteries are shifting from mobile devices to mobility.

Secondary batteries are manufactured through an electrode process, an assembly process and an activation process. Among them, the electrode process is the most essential process for determining the yield and performance of the battery cell. The electrode process may include a mixing process, a coating process, a roll pressing process, and a slitting process. In the mixing process, an electrode slurry including active materials, conductive materials, and a binder can be provided. In the coating process, active materials and insulating materials may be coated on the surface of the current collector. In the roll pressing process, the electrode may be pressed by pressing rolls. The roll pressing process may determine the density, performance, and surface quality of the electrodes. In the slitting process, the electrodes may be cut into a plurality of electrodes according to the battery cell design.

### [Summary]

### [Technical Problem]

The technical problem to be solved by the present disclosure is to provide a secondary battery manufacturing facility with improved productivity and a method of manufacturing a secondary battery using the same.

### [Technical Solution]

According to exemplary embodiments of the present disclosure to solve the above-described problem, a secondary battery manufacturing facility is provided. The facility comprises: an electrode slurry supply tank configured to accommodate electrode slurry; a pump configured to move the electrode slurry in the electrode slurry supply tank; a die coater configured to apply the electrode slurry to an electrode current collector; a first supply pipe connecting the electrode slurry supply tank and the pump; a second supply pipe connecting the pump and a branch pipe; a third supply pipe connecting the branch pipe and the die coater; a return pipe connecting the branch pipe and the electrode slurry supply tank; a supply valve installed in the third supply pipe; and a return valve installed in the return pipe, wherein a sum of a length of the first supply pipe and a length of the second supply pipe is different from a length of the third supply pipe.

The sum of the length of the first supply pipe and the length of the second supply pipe is shorter than the length of the third supply pipe.

The sum of the length of the first supply pipe and the length of the second supply pipe is 50% or less of the length of the third supply pipe.

According to exemplary embodiments, a secondary battery manufacturing facility is provided. The facility comprises: an electrode slurry supply tank configured to accommodate electrode slurry; a pump configured to move the electrode slurry in the electrode slurry supply tank; a die coater configured to apply the electrode slurry to an electrode current collector; a first supply pipe connecting the electrode slurry supply tank and the pump; a second supply pipe connecting the pump and a branch pipe; a third supply pipe connecting the branch pipe and the die coater; a return pipe connecting the branch pipe and the electrode slurry supply tank; a supply valve installed in the third supply pipe; and a return valve installed in the return pipe, wherein a length of the return pipe is different from a length of the third supply pipe.

The length of the return pipe is shorter than the length of the third supply pipe.

The length of the return pipe is 50% or less of the length of the third supply pipe.

According to exemplary embodiments, a secondary battery manufacturing facility is provided. The facility comprises: an electrode slurry supply tank configured to accommodate electrode slurry; a pump configured to move the electrode slurry in the electrode slurry supply tank; a die coater configured to apply the electrode slurry to an electrode current collector; a first supply pipe connecting the electrode slurry supply tank and the pump; a second supply pipe connecting the pump and a branch pipe; a third supply pipe connecting the branch pipe and the die coater; a return pipe connecting the branch pipe and the electrode slurry supply tank; a supply valve installed in the third supply pipe; and a return valve installed in the return pipe, wherein a distance between the branch pipe and the electrode slurry supply tank is different from a distance between the branch pipe and the die coater.

The distance between the branch pipe and the electrode slurry supply tank is shorter than the distance between the branch pipe and the die coater.

The distance between the branch pipe and the electrode slurry supply tank is 50% or less of the distance between the branch pipe and the die coater.

According to exemplary embodiments, a method of manufacturing a secondary battery is provided. The method comprises: a step of turning off a return valve installed in a return pipe connecting a branch pipe and an electrode slurry supply tank; and a step of turning on a supply valve installed in a supply pipe connecting the branch pipe and a die coater, wherein a length of the return pipe is different from a length of the supply pipe.

The length of the return pipe is shorter than the length of the supply pipe.

The length of the return pipe is 50% or less of the length of the supply pipe.

### [Advantageous Effects]

According to exemplary embodiments of the present disclosure, the length of the return pipe connecting the branch pipe and the electrode slurry supply tank can be reduced. Accordingly, the amount of electrode slurry that remains stationary state in the return pipe in the supply mode can be reduced or minimized, and the reliability of the coating process can be improved.

The technical effects that can be obtained in exemplary embodiments of the present disclosure are not limited to the above-described effects, and other effects not mentioned can be clearly derived and understood by a person skilled in the art from the following description. In other words, unintended effects of implementing the exemplary embodiments of the present disclosure may also be derived from the exemplary embodiments of the present disclosure by a person skilled in the art.

### [Brief Description of the Drawings]

FIG. 1 illustrates a secondary battery manufacturing facility according to exemplary embodiments.
FIG. 2 is a flowchart for describing a method of manufacturing a secondary battery according to exemplary embodiments.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (first embodiment)

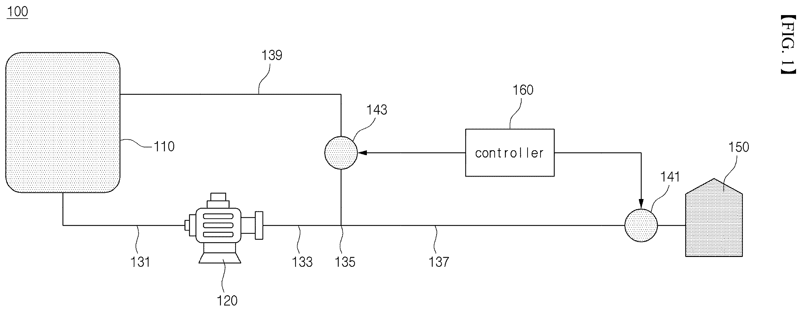

FIG. 1 illustrates a secondary battery manufacturing facility 100 according to exemplary embodiments.

Referring to FIG. 1, the secondary battery manufacturing facility 100 may include an electrode slurry supply tank 110, a pump 120, a first supply pipe 131, a second supply pipe 133, a branch pipe 135, a third supply pipe 137, a return pipe 139, a supply valve 141, a return valve 143, a die coater 150, and a controller 160.

According to exemplary embodiments, the secondary battery manufacturing facility 100 may be configured to perform processes for secondary battery manufacturing. The secondary battery manufacturing facility 100 may be an electrode slurry supply system. The secondary battery manufacturing facility 100 may be configured to perform a coating process for applying a negative electrode slurry or a positive electrode slurry to an electrode current collector.

The secondary battery manufacturing facility 100 may further include a mixer. The mixer may be configured to perform a mixing process. The mixing process may include a premixing process for dissolving a binder and/or a conductive material in a solvent before introducing them into a main mixer, and a main mixing process for finally mixing an electrode active material, a conductive material, and a binder, etc. to provide an electrode slurry.

Here, the electrode slurry may be used in a coating process of secondary batteries. The electrode slurry may include an electrode active material, a conductive material, a binder, and a solvent. The electrode slurry may be manufactured by dissolving the electrode active material, the conductive material, and the binder in the solvent. The solvent may disperse the electrode active material, the binder, and the conductive material. The solvent may be an aqueous solvent or a non-aqueous solvent. The solvent may include any one of dimethyl sulfoxide (DMSO), isopropyl alcohol, N-methyl pyrrolidone (NMP), acetone, water, and mixtures thereof. The amount of solvent used may be determined based on a target viscosity of the electrode slurry. Parameters for determining the amount of solvent used include coating thickness of the electrode slurry, manufacturing yield, and workability.

A positive electrode active material is a material capable of causing electrochemical reactions. The positive electrode active material may be a lithium transition metal oxide. The positive electrode active material may include, for example, layered compounds such as lithium cobalt oxide (LiCoO₂) and lithium nickel oxide (LiNiO₂) substituted with one or more transition metals, lithium manganese oxide substituted with one or more transition metals, lithium nickel-based oxide represented by the formula LiNi _{1-y}M _{y}O₂ (where M is any one of Co, Mn, Al, Cu, Fe, Mg, B, Cr, Zn, and Ga, and 0.01≤y≤0.7), lithium nickel cobalt manganese composite oxide represented by Li_{1+z}Ni_{b}Mn_{c}Co_{1-(b+c+d)}M_{d}O₍₂₋ₑ₎Aₑ (where -0.5≤z≤0.5, 0.1≤b≤0.8, 0.1≤c≤0.8, 0≤d≤0.2, 0≤e≤0.2, b+c+d<1, M is any one of Al, Mg, Cr, Ti, Si, and Y, and A is any one of F, P, and Cl) such as Li_{1+z}Ni_{1/3}Co_{1/3}Mn_{1/3}O₂, Li_{1+z}Ni_{0.4}Mn_{0.4}Co_{0.2}O₂, and olivine-based lithium metal phosphate represented by the formula Li₁₊ₓM_{1-y}M'_{y}PO_{4-z}X_{z} (where M is a transition metal, more specifically any one of Fe, Mn, Co, and Ni, M' is any one of Al, Mg, and Ti, X is any one of F, S, and N, -0.5≤x≤+0.5, 0≤y≤0.5, and 0≤z≤0.1).

A negative electrode active material may include, for example, carbon such as non-graphitizable carbon and graphitic carbon. The negative electrode active material may include, for example, metal composite oxides such as LiₓFe₂O₃ (0≤x≤1), LiₓWO₂ (0≤x≤1), SnₓMe₁₋ₓMe'_{y}O_{z} (where Me is any one of Mn, Fe, Pb, and Ge, Me' is any one of Al, B, P, Si, Group 1, Group 2, Group 3 elements of the periodic table, and halogens, 0<x≤1, 1≤y≤3, and 1≤z≤8). The negative electrode active material may include, for example, any one of lithium metal, lithium alloys, silicon-based alloys, and tin-based alloys. The negative electrode active material may include, for example, metal oxides such as SnO, SnO₂, PbO, PbO₂, Pb₂O₃, Pb₃O₄, Sb₂O₃, Sb₂O₄, Sb₂0₅, GeO, GeO₂, Bi₂O₃, Bi₂O₄, and Bi₂O₅. The negative electrode active material may also include, for example, conductive polymers such as polyacetylene, Li-Co-Ni based materials, and the like.

The conductive material may have conductivity without causing chemical changes in the finally manufactured secondary battery. The conductive material may include, for example, graphite such as natural graphite or artificial graphite, carbon black such as acetylene black, Ketjen black, channel black, furnace black, lamp black, and thermal black, conductive fibers such as carbon fibers or metal fibers, fluorinated carbon, metal powders such as aluminum powder and nickel powder, conductive whiskers such as zinc oxide and potassium titanate, conductive metal oxides such as titanium oxide, and polyphenylene derivatives.

The binder may improve bonding between active materials and conductive materials and adhesion to the current collector. The binder may include, for example, polyvinylidene fluoride, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene terpolymer (EPDM), sulfonated EPDM, styrene butylene rubber, fluorine rubber, and various copolymers.

The electrode slurry supply tank 110 may be configured to store and supply electrode slurry. The electrode slurry supply tank 110 may include a stirrer configured to stir the electrode slurry. Physical properties of the electrode slurry such as viscosity may be maintained by operation of the stirrer. The electrode slurry supply tank 110 may include an input pipe through which electrode slurry is introduced. The input pipe may include a metering pipe, but is not limited thereto.

The first supply pipe 131 may connect the electrode slurry supply tank 110 and the pump 120. The pump 120 may be configured to provide power for flow and circulation of electrode slurry in circulation mode and supply mode of the secondary battery manufacturing facility 100.

The second supply pipe 133 may connect the pump 120 and the branch pipe 135. The electrode slurry that has passed through the pump 120 may be delivered to the branch pipe 135 through the second supply pipe 133. The branch pipe 135 may be a 3-way pipe. The branch pipe 135 may be connected to the second and third supply pipes 133, 137 and the return pipe 139. Accordingly, the electrode slurry flowing through the second supply pipe 133 may flow to the third supply pipe 137 or may flow to the return pipe 139.

A filter may be further installed in the second supply pipe 133. The filter may be configured to remove impurities from the electrode slurry or to block part of the electrode slurry based on particle size. Reliability and uniformity of the coating process may be provided by operation of the filter.

The third supply pipe 137 may be connected to the branch pipe 135. The third supply pipe 137 may be connected to the die coater 150. The die coater 150 may receive electrode slurry through the third supply pipe 137 and may be configured to perform a coating process.

More specifically, a sheet-shaped electrode may be formed by applying electrode slurry containing electrode active material on a current collector, and drying and rolling to form an electrode mixture layer. The die coater 150 may be, for example, a slot die. The current collector may be a positive electrode current collector or a negative electrode current collector, and the electrode active material may be a positive electrode active material or a negative electrode active material.

The thickness of the positive electrode current collector may range from about 3 µm to about 500 µm. The positive electrode current collector may not cause chemical changes in the finally manufactured secondary battery and may have high conductivity. The positive electrode current collector may include, for example, any one of stainless steel, nickel, titanium, fired carbon, and aluminum. The positive electrode current collector may also include stainless steel surface-treated with carbon, nickel, titanium, silver, and the like. The surface of the positive electrode current collector may include a fine uneven structure to increase adhesion of the active material. The shape of the positive electrode current collector may include any one of film, sheet, foil, net, porous, foam, and non-woven fabric.

The thickness of the negative electrode current collector may range from about 3 µm to about 500 µm. The negative electrode current collector may not cause chemical changes in the finally manufactured secondary battery and may have high conductivity. The negative electrode current collector may include any one of copper, stainless steel, aluminum, nickel, titanium, fired carbon, and aluminum-cadmium alloy. The negative electrode current collector may also include stainless steel surface-treated with carbon, nickel, titanium, silver, and the like. The surface of the negative electrode current collector may include a fine uneven structure to increase adhesion of the active material. The shape of the negative electrode current collector may include any one of film, sheet, foil, net, porous, foam, and non-woven fabric.

The return pipe 139 may be connected to the branch pipe 135. The return pipe 139 may be connected to the electrode slurry supply tank 110. Accordingly, when the secondary battery manufacturing facility is in return mode, electrode slurry may circulate through the first supply pipe 131, the second supply pipe 133 and the return pipe 139, thereby preventing deterioration of characteristics of the electrode slurry.

According to exemplary embodiments, the length of the return pipe 139 may be different from the length of the third supply pipe 137. According to exemplary embodiments, the length of the return pipe 139 may be shorter than the length of the third supply pipe 137.

According to exemplary embodiments, the length of the return pipe 139 may be about 90% or less of the length of the third supply pipe 137. According to exemplary embodiments, the length of the return pipe 139 may be about 80% or less of the length of the third supply pipe 137. According to exemplary embodiments, the length of the return pipe 139 may be about 70% or less of the length of the third supply pipe 137. According to exemplary embodiments, the length of the return pipe 139 may be about 60% or less of the length of the third supply pipe 137. According to exemplary embodiments, the length of the return pipe 139 may be about 50% or less of the length of the third supply pipe 137. According to exemplary embodiments, the length of the return pipe 139 may be about 40% or less of the length of the third supply pipe 137. According to exemplary embodiments, the length of the return pipe 139 may be about 30% or less of the length of the third supply pipe 137. According to exemplary embodiments, the length of the return pipe 139 may be about 20% or less of the length of the third supply pipe 137. According to exemplary embodiments, the length of the return pipe 139 may be about 10% or less of the length of the third supply pipe 137.

According to exemplary embodiments, the sum of the length of the first supply pipe 131 and the length of the second supply pipe 133 may be different from the length of the third supply pipe 137. According to exemplary embodiments, the sum of the length of the first supply pipe 131 and the length of the second supply pipe 133 may be shorter than the length of the third supply pipe 137. According to exemplary embodiments, the sum of the length of the first supply pipe 131 and the length of the second supply pipe 133 may be 50% or less of the length of the third supply pipe 137.

According to exemplary embodiments, the sum of the length of the first supply pipe 131 and the length of the second supply pipe 133 may be about 90% or less of the length of the third supply pipe 137. According to exemplary embodiments, the sum of the length of the first supply pipe 131 and the length of the second supply pipe 133 may be about 80% or less of the length of the third supply pipe 137. According to exemplary embodiments, the sum of the length of the first supply pipe 131 and the length of the second supply pipe 133 may be about 70% or less of the length of the third supply pipe 137. According to exemplary embodiments, the sum of the length of the first supply pipe 131 and the length of the second supply pipe 133 may be about 60% or less of the length of the third supply pipe 137. According to exemplary embodiments, the sum of the length of the first supply pipe 131 and the length of the second supply pipe 133 may be about 50% or less of the length of the third supply pipe 137. According to exemplary embodiments, the sum of the length of the first supply pipe 131 and the length of the second supply pipe 133 may be about 40% or less of the length of the third supply pipe 137. According to exemplary embodiments, the sum of the length of the first supply pipe 131 and the length of the second supply pipe 133 may be about 30% or less of the length of the third supply pipe 137. According to exemplary embodiments, the sum of the length of the first supply pipe 131 and the length of the second supply pipe 133 may be about 20% or less of the length of the third supply pipe 137. According to exemplary embodiments, the sum of the length of the first supply pipe 131 and the length of the second supply pipe 133 may be about 10% or less of the length of the third supply pipe 137.

According to exemplary embodiments, the distance between the branch pipe 135 and the electrode slurry supply tank 110 may be different from the distance between the branch pipe 135 and the die coater 150. According to exemplary embodiments, the distance between the branch pipe 135 and the electrode slurry supply tank 110 may be shorter than the distance between the branch pipe 135 and the die coater 150.

According to exemplary embodiments, the distance between the branch pipe 135 and the electrode slurry supply tank 110 may be about 90% or less of the distance between the branch pipe 135 and the die coater 150. According to exemplary embodiments, the distance between the branch pipe 135 and the electrode slurry supply tank 110 may be about 80% or less of the distance between the branch pipe 135 and the die coater 150. According to exemplary embodiments, the distance between the branch pipe 135 and the electrode slurry supply tank 110 may be about 70% or less of the distance between the branch pipe 135 and the die coater 150. According to exemplary embodiments, the distance between the branch pipe 135 and the electrode slurry supply tank 110 may be about 60% or less of the distance between the branch pipe 135 and the die coater 150. According to exemplary embodiments, the distance between the branch pipe 135 and the electrode slurry supply tank 110 may be about 50% or less of the distance between the branch pipe 135 and the die coater 150. According to exemplary embodiments, the distance between the branch pipe 135 and the electrode slurry supply tank 110 may be about 40% or less of the distance between the branch pipe 135 and the die coater 150. According to exemplary embodiments, the distance between the branch pipe 135 and the electrode slurry supply tank 110 may be about 30% or less of the distance between the branch pipe 135 and the die coater 150. According to exemplary embodiments, the distance between the branch pipe 135 and the electrode slurry supply tank 110 may be about 20% or less of the distance between the branch pipe 135 and the die coater 150. According to exemplary embodiments, the distance between the branch pipe 135 and the electrode slurry supply tank 110 may be about 10% or less of the distance between the branch pipe 135 and the die coater 150.

A pressure gauge may be installed in the third supply pipe 137. The pressure gauge may be configured to measure pressure inside the third supply pipe 137. The pressure gauge may be adjacent to the die coater 150. Accordingly, pressure in the portion of the third supply pipe 137 adjacent to the die coater 150 may be monitored, and pressure similar to the pressure applied to the die coater 150 may be monitored, so that reliability of pressure-based supply control may be improved.

According to exemplary embodiments, the length of the third supply pipe 137 between the pressure gauge and the die coater 150 may be different from the length of the third supply pipe 137 between the pressure gauge and the branch pipe 135. According to exemplary embodiments, the length of the third supply pipe 137 between the pressure gauge and the die coater 150 may be greater than the length of the third supply pipe 137 between the pressure gauge and the branch pipe 135.

The pressure gauge may be a seamless pressure gauge. In the seamless pressure gauge, the seal and gauge may be processed by methods such as welding, thereby preventing or mitigating fluid leakage. The pressure gauge may be configured to transmit measured pressure to the controller 160 based on wireless communication, but is not limited thereto. A communication line for transmitting pressure data between the pressure gauge and the controller 160 may also be installed.

The pressure gauge may be configured to operate based on a preset monitoring period. The pressure gauge may be configured to measure pressure inside the third supply pipe 137 and transmit the measured pressure to the controller whenever the monitoring period arrives.

The supply valve 141 may be configured to allow or block flow of electrode slurry from the third supply pipe 137 to the die coater 150. The supply valve 141 may be an electronic valve. The supply valve 141 may operate based on control signals from the controller 160. The supply valve 141 may be turned on or turned off based on control signals from the controller 160.

The return valve 143 may be configured to allow or block flow of electrode slurry from the return pipe 139 to the electrode slurry supply tank 110. The return valve 143 may be an electronic valve. The return valve 143 may operate based on control signals from the controller 160. The return valve 143 may be turned on or turned off based on control signals from the controller 160.

The secondary battery manufacturing facility 100 may be in supply mode or may be in circulation mode. The secondary battery manufacturing facility 100 may switch from supply mode to circulation mode or may switch from circulation mode to supply mode based on turn on and turn off operations of the supply valve 141 and the return valve 143.

In the supply mode of the secondary battery manufacturing facility 100, the supply valve 141 may allow flow of electrode slurry through the third supply pipe 137 and the return valve 143 may block flow of electrode slurry through the return pipe 139. Accordingly, a supply path for electrode slurry including the electrode slurry supply tank 110, the first supply pipe 131, the pump 120, the second supply pipe 133, the branch pipe 135, the third supply pipe 137, and the die coater may be provided.

In the circulation mode of the secondary battery manufacturing facility 100, the supply valve 141 may block flow of electrode slurry through the third supply pipe 137 and the return valve 143 may allow flow of electrode slurry through the return pipe 139. Accordingly, a circulation path for electrode slurry including the electrode slurry supply tank 110, the first supply pipe 131, the pump 120, the second supply pipe 133, the branch pipe 135, and the return pipe 139may be provided.

For the secondary battery manufacturing facility 100 to switch from supply mode to circulation mode, the supply valve 141 may be turned off and the return valve 143 may be turned on. For the secondary battery manufacturing facility 100 to switch from circulation mode to supply mode, the supply valve 141 may be turned on and the return valve 143 may be turned off.

The controller 160 may be configured to generate signals for controlling various elements of the secondary battery manufacturing facility 100 including the supply valve 141 and the return valve 143 based on user operation or predetermined recipes. The controller 160 may be configured to receive pressure data measured by the pressure gauge. The controller 160 may be configured to generate signals for controlling the supply valve 141 based on the pressure data.

The controller 160 may be a PLC (Programmable Logic Controller). A PLC is a specialized form of microprocessor-based controller that uses programmable memory to store instructions and implements functions such as logic, sequencing, timing, counting, and arithmetic to control machines and processes. PLCs are easy to operate and program.

The controller 160 may include a power supply, CPU, input interface, output interface, communication interface, and memory devices. The power supply may be configured to supply power to other elements of the controller such as the CPU, input interface, output interface, communication interface, and memory devices for operation of the controller. The memory devices may include ROM (Read Only Memory) configured to store system programs such as operating systems and RAM (Random Access Memory) configured to store data such as user programs and status information of input and output devices, values of timers, counters, and other internal devices. The CPU may be configured to implement logic and control communication between modules that convert input signals to output operation signals. The CPU may operate based on system programs and user programs stored in the memory devices. The CPU may be configured to write or read inspection data and measurement data to data areas of the memory devices based on the system programs and user programs. Conditions or data of industrial devices and production processes may be transmitted to the CPU through input modules. Results processed by the CPU may be transmitted to actuators through output modules. The communication interface may be configured to relay the transmission and reception of data between the controller and other network elements.

However, it is not limited thereto, and the controller 160 may include any one of simple controllers, complex processors such as microprocessors, CPUs, GPUs, processors configured by software, dedicated hardware, and firmware. The controller may be implemented by, for example, general-purpose computers or application-specific hardware such as DSP (Digital Signal Processor), FPGA (Field Programmable Gate Array), and ASIC (Application Specific Integrated Circuit).

### (second embodiment)

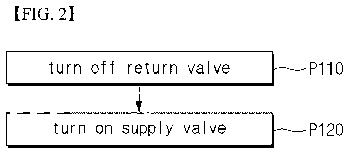

FIG. 2 is a flowchart for describing a method of manufacturing a secondary battery according to exemplary embodiments.

Referring to FIG. 1 and FIG. 2, in P110, the return valve 143 may be turned off. The controller 160 may be configured to generate a first signal for turning off the return valve 143 and transmit the first signal to the return valve 143. The return valve 143 may receive the first signal and be turned off based on the first signal.

Subsequently, in P120, the supply valve 141 may be turned on. The controller 160 may be configured to generate a second signal for turning on the supply valve 141 and transmit the second signal to the supply valve 141. The supply valve 141 may receive the second signal and be turned on based on the second signal. Accordingly, the secondary battery manufacturing facility 100 may be in supply mode.

According to exemplary embodiments, in the supply mode of the secondary battery manufacturing facility 100, the electrode slurry inside the return pipe 139 may be in a stationary state. Generally, the coating process by the secondary battery manufacturing facility 100 is a continuous process that continues for a long time. Accordingly, agglomeration and sedimentation may occur in the electrode slurry inside the return pipe 139 that does not flow for a long time in the supply mode.

Agglomeration of electrode slurry refers to a process in which solid particles in the slurry combine with each other to form larger particles or lumps. The agglomeration of electrode slurry occurs due to physical and chemical interactions between active material particles. Sedimentation of electrode slurry is when solid particles in the slurry gradually settle downward due to gravity, separating the solvent and active material. The agglomeration and sedimentation cause quality deterioration of electrode slurry and are among the major management factors in the coating process.

The secondary battery manufacturing facility 100 according to exemplary embodiments may have a shorter length of the return pipe 139 compared to the third supply pipe 137, thereby improving yield and reliability of the coating process while reducing the amount of wasted electrode slurry.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

## Claims

1. A secondary battery manufacturing facility, comprising:
an electrode slurry supply tank configured to accommodate electrode slurry;
a pump configured to move the electrode slurry in the electrode slurry supply tank;
a die coater configured to apply the electrode slurry to an electrode current collector;
a first supply pipe connecting the electrode slurry supply tank and the pump;
a second supply pipe connecting the pump and a branch pipe;
a third supply pipe connecting the branch pipe and the die coater;
a return pipe connecting the branch pipe and the electrode slurry supply tank;
a supply valve installed in the third supply pipe; and
a return valve installed in the return pipe,
wherein a sum of a length of the first supply pipe and a length of the second supply pipe is different from a length of the third supply pipe.

2. The secondary battery manufacturing facility of claim 1, wherein the sum of the length of the first supply pipe and the length of the second supply pipe is shorter than the length of the third supply pipe.

3. The secondary battery manufacturing facility of claim 1, wherein the sum of the length of the first supply pipe and the length of the second supply pipe is 50% or less of the length of the third supply pipe.

4. A secondary battery manufacturing facility, comprising:
an electrode slurry supply tank configured to accommodate electrode slurry;
a pump configured to move the electrode slurry in the electrode slurry supply tank;
a die coater configured to apply the electrode slurry to an electrode current collector;
a first supply pipe connecting the electrode slurry supply tank and the pump;
a second supply pipe connecting the pump and a branch pipe;
a third supply pipe connecting the branch pipe and the die coater;
a return pipe connecting the branch pipe and the electrode slurry supply tank;
a supply valve installed in the third supply pipe; and
a return valve installed in the return pipe,
wherein a length of the return pipe is different from a length of the third supply pipe.

5. The secondary battery manufacturing facility of claim 4, wherein the length of the return pipe is shorter than the length of the third supply pipe.

6. The secondary battery manufacturing facility of claim 4, wherein the length of the return pipe is 50% or less of the length of the third supply pipe.

7. A secondary battery manufacturing facility, comprising:
an electrode slurry supply tank configured to accommodate electrode slurry;
a pump configured to move the electrode slurry in the electrode slurry supply tank;
a die coater configured to apply the electrode slurry to an electrode current collector;
a first supply pipe connecting the electrode slurry supply tank and the pump;
a second supply pipe connecting the pump and a branch pipe;
a third supply pipe connecting the branch pipe and the die coater;
a return pipe connecting the branch pipe and the electrode slurry supply tank;
a supply valve installed in the third supply pipe; and
a return valve installed in the return pipe,
wherein a distance between the branch pipe and the electrode slurry supply tank is different from a distance between the branch pipe and the die coater.

8. The secondary battery manufacturing facility of claim 7, wherein the distance between the branch pipe and the electrode slurry supply tank is shorter than the distance between the branch pipe and the die coater.

9. The secondary battery manufacturing facility of claim 7, wherein the distance between the branch pipe and the electrode slurry supply tank is 50% or less of the distance between the branch pipe and the die coater.

10. A method of manufacturing a secondary battery, comprising:
a step of turning off a return valve installed in a return pipe connecting a branch pipe and an electrode slurry supply tank; and
a step of turning on a supply valve installed in a supply pipe connecting the branch pipe and a die coater,
wherein a length of the return pipe is different from a length of the supply pipe.

11. The method of manufacturing a secondary battery of claim 10, wherein the length of the return pipe is shorter than the length of the supply pipe.

12. The method of manufacturing a secondary battery of claim 10, wherein the length of the return pipe is 50% or less of the length of the supply pipe.
